# EUROPEAN PATENT APPLICATION

(11) **EP 1 555 612 A2**
(43) Date of publication of application: **20.07.2005**
(21) Application number: 04030985.8
(22) Date of filing: 29.12.2004
(51) Int. Cl.: G06F 9/44, G06F 9/46

(54) **System and method for implicit synchronization of message-queue-based user interface with an automatic code**

(30) Priority: 02.01.2004 US 751336
(71) Applicant: MICROSOFT CORPORATION, Redmond, WA 98052 (US)
(72) Inventor: Doggett, John D., Redmond WA 98052 (US)
(74) Representative: Grünecker, Kinkeldey, Stockmair & Schwanhäusser Anwaltssozietät

(57) **Abstract**

A system and method for implicit synchronization of user interface automation code with code of a computer program. A synchronization API is called that hooks into the message-queue of windows corresponding to the user interface. The synchronization API returns when the relevant threads corresponding to the windows and other system activities indicate that the message-queues are empty. The empty message-queues indicate that the user interface is idle and that the automation code may process its next action.

## Description

### Background of the Invention

The iterative process of correcting errors associated with computer programs is an important part of delivering a product that meets customer expectations. Various testing procedures have been developed for testing computer programs. Certain tests have been automated to allow for repetitive automatic testing for various portions of a computer program.

One portion of the computer program to which automated processes have been applied includes user interface (UI) functionality. UI test automation code is provided for automatic testing of selected aspects of the UI for a computer program.

### Summary of the Invention

The present invention allows for implicit synchronization of automation code with the state of a computer program. Generally, an author of the automation code would need to write synchronization code for the automation to operate in testing the user interface of a computer program. The present invention removes the necessity of such explicit synchronization code. In accordance with the present invention, the automation code is event driven, detecting when an action involving the UI of a program is complete. Accordingly, the automation code is implicitly synchronized with the computer program and may confirm when each action associated with the UI of the computer program is complete. Stated differently, the present invention introduces a heuristic that declares that any particular step of the automation is not complete until the system is ready for the next step (i.e., the computer program UI is ready for the next automation step). A synchronization API is called that hooks into the message-queue of windows corresponding to the user interface. The synchronization API returns when the relevant threads corresponding to the windows and other system activities indicate that the message-queues are empty. The empty message-queues indicate that the user interface is idle and that the automation code may process its next action.

### Brief Description of the Drawings

FIGURE 1 illustrates an exemplary computing device that may be used in one exemplary embodiment of the present invention.
FIGURE 2 illustrates an exemplary mobile device that may be used in one exemplary embodiment of the present invention.
FIGURE 3 illustrates a block diagram illustrating a typical UI output on a desktop of a computing device in accordance with the present invention.
FIGURE 4 illustrates a logical flow diagram of a process for implicit UI synchronization in accordance with the present invention.

### Detailed Description

The present invention now will be described more fully hereinafter with reference to the accompanying drawings, which form a part hereof, and which show, by way of illustration, specific exemplary embodiments for practicing the invention. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

### Illustrative Operating Environment

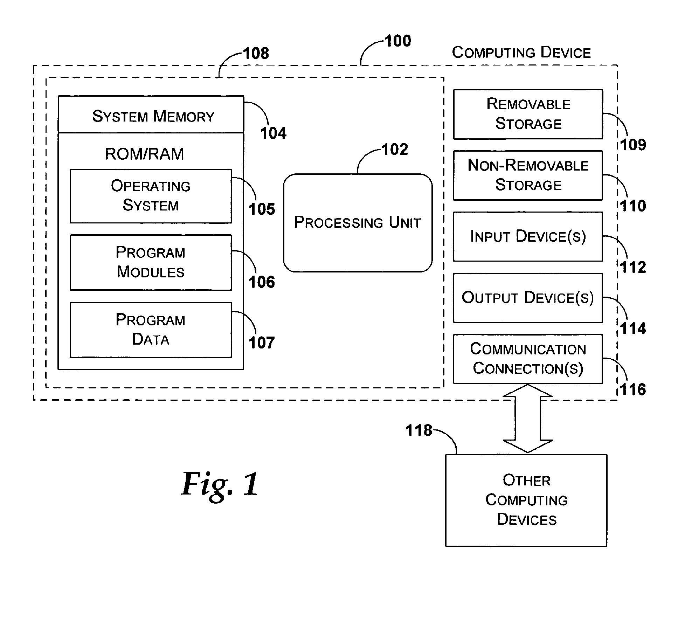

FIGURE 1 shows an exemplary computing device that may be included in system **100** for implementing the invention. Computing device **100** illustrates a general operating environment that may apply to the present invention. In a very basic configuration, computing device **100** typically includes at least one processing unit **102** and system memory **104**. Processing unit **102** includes existing physical processors, those in design, multiple processors acting together, virtual processors, and any other device or software program capable of interpreting binary executable instructions. Depending on the exact configuration and type of computing device, the system memory **104** may be volatile (such as RAM), non-volatile (such as ROM, flash memory, etc.) or some combination of the two. System memory **104** typically includes an operating system **105**, one or more program modules **106**, and may include program data **107**. This basic configuration is illustrated in FIGURE 1 by those components within dashed line **108**.

Computing device **100** may also have additional features or functionality. For example, computing device **100** may also include additional data storage devices (removable and/or non-removable) such as, for example, magnetic disks, optical disks, or tape. Such additional storage is illustrated in FIGURE 1 by removable storage **109** and non-removable storage **110**. Computer storage media may include volatile and nonvolatile, removable and non-removable media implemented in any method or technology for storage of information, such as computer readable instructions, data structures, program modules or other data. System memory **104**, removable storage **109** and non-removable storage **110** are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device **100**. Any such computer storage media may be part of computing device **100**. Computing device **100** may also have input device(s) **112** such as keyboard, mouse, pen, stylus, voice input device, touch input device, etc. Output device(s) **114** such as a display, speakers, printer, etc. may also be included. All these devices are known in the art and need not be discussed at length here.

Computing device **100** may also contain communications connection(s) 116 that allow the device to communicate with other computing devices **118,** such as over a network. Communications connection(s) **116** is an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

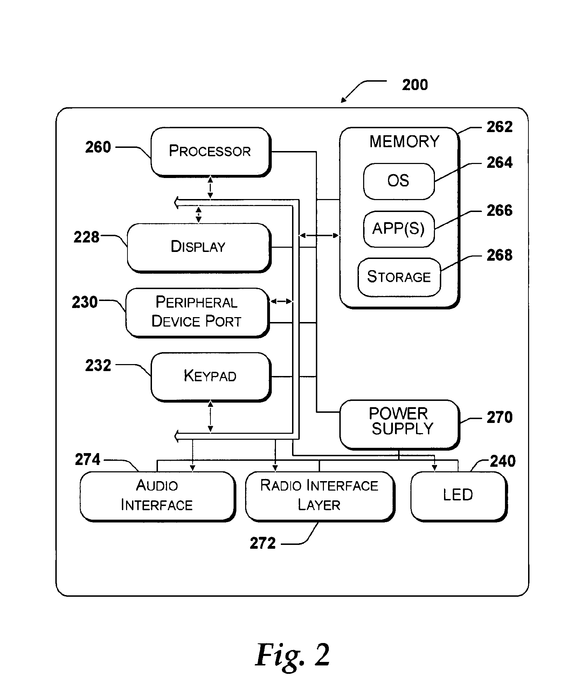

FIGURE 2 shows an alternative operating environment for a mobile device substantially for use in the present invention. In one embodiment of the present invention, mobile device **200** is integrated with a computing device, such as an integrated personal digital assistant (PDA) and wireless phone.

In this embodiment, mobile device **200** has a processor **260**, a memory **262,** a display **228**, and a keypad **232**. Memory **262** generally includes both volatile memory (e.g., RAM) and non-volatile memory (e.g., ROM, Flash Memory, or the like). Mobile device **200** includes an operating system **264**, which is resident in memory **262** and executes on processor **260**. Keypad **232** may be a push button numeric dialing pad (such as on a typical telephone), a multi-key keyboard (such as a conventional keyboard), or may be not be included in the mobile device in deference to a touch screen or stylus. Display **228** may be a liquid crystal display, or any other type of display commonly used in mobile computing devices. Display **228** may be touch-sensitive, and would then also act as an input device.

One or more application programs **266** are loaded into memory **262** and run on operating system **264**. Examples of application programs include phone dialer programs, e-mail programs, scheduling programs, PIM (personal information management) programs, word processing programs, spreadsheet programs, Intemet browser programs, and so forth. Mobile device **200** also includes non-volatile storage **268** within the memory **262**. Non-volatile storage **268** may be used to store persistent information which should not be lost if mobile device **200** is powered down. The applications **266** may use and store information in storage **268**, such as e-mail or other messages used by an e-mail application, contact information used by a PIM, appointment information used by a scheduling program, documents used by a word processing application, and the like. A synchronization application also resides on the mobile device and is programmed to interact with a corresponding synchronization application resident on a host computer to keep the information stored in the storage 268 synchronized with corresponding information stored at the host computer.

Mobile device **200** has a power supply **270**, which may be implemented as one or more batteries. Power supply **270** might further include an external power source, such as an AC adapter or a powered docking cradle that supplements or recharges the batteries.

Mobile device **200** is also shown with two types of external notification mechanisms: an LED **240** and an audio interface **274**. These devices may be directly coupled to power supply **270** so that when activated, they remain on for a duration dictated by the notification mechanism even though processor **260** and other components might shut down to conserve battery power. LED **240** may be programmed to remain on indefinitely until the user takes action to indicate the powered-on status of the device. Audio interface **274** is used to provide audible signals to and receive audible signals from the user. For example, audio interface **274** may be coupled to a speaker for providing audible output and to a microphone for receiving audible input, such as to facilitate a telephone conversation.

Mobile device **200** also includes a radio **272** that performs the function of transmitting and receiving radio frequency communications. Radio **272** facilitates wireless connectivity between the mobile device **200** and the outside world, via a communications carrier or service provider. Transmissions to and from the radio **272** are conducted under control of the operating system **264**. In other words, communications received by the radio **272** may be disseminated to application programs **266** via the operating system **264**, and vice versa.

The radio **272** allows the mobile device **200** to communicate with other computing devices, such as over a network. The radio **272** is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

### Message-Queue-Based UI Automation Synchronization

A problem with traditional UI test automation code is that the driving logic is executed asynchronously with the UI-based target being tested. This is usually the only option because the generic methods used to drive the UI are themselves not synchronous. The result is that the author of such automation must explicitly provide code to synchronize the automation with the state of the application. That is, perform an action, wait for an arbitrary period of time or for some explicit signal that the action is done, and then proceed to the next action. Certain explicit synchronization solutions involved placing the automation in a loop for a specified period of time to ensure that the state of the computer program reached a specified condition. This extra synchronization code is arcane to write and a virtually guaranteed maintenance expense, as the user will invariably have to tune to work around performance issues, where explicit signals are not available. Another problem is that this explicit synchronization is usually not optimal, and lags the readiness of the program by significant time periods (often heavily padded to improve reliability). This makes automation code for performance testing difficult to write.

Implicit synchronization addresses the first problem by removing the need for the author to write code to handle synchronization, because it always "knows" when an action is "done". The code thereby reflects the specific intent, and is not dirtied by the logistics of waiting for the right time to perform the next action.

Message-queue-based synchronization addresses the second problem by detecting that an action is complete at the optimal time, effectively becoming event driven.

The present invention allows for a level of performance testing that wasn't available when set delays are written into the automation process.

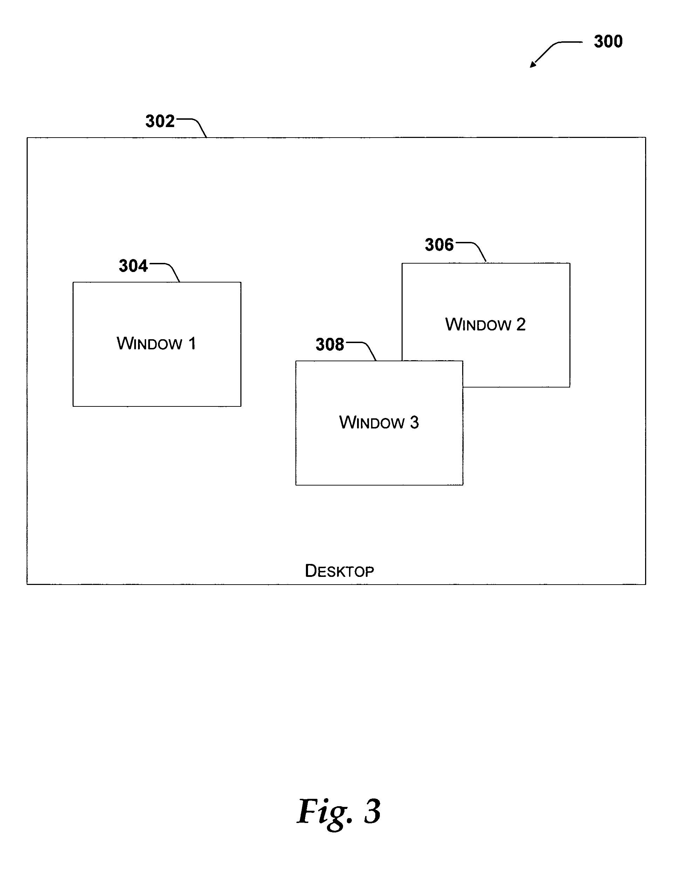

FIGURE 3 illustrates a block diagram illustrating a typical UI output **300** on a desktop of a computing device in accordance with the present invention. The desktop **302** includes exemplary windows **304, 306,** and **308**. Each of the windows (e.g., **304**) may correspond to different programs stored within a corresponding computing device or other location and displayed by the computing device. In another embodiment, a program may provide a UI output that is not shown in a desktop format, but is rather a full screen output or another type of output.

The display that results in a particular window (e.g., **304**) corresponds to messages sent to the system of the computing device that then renders the display within the particular window. The messages correspond to UI events that are provided to the system as a result of an Application Program Interface (API) call. The API call is provided by the program to trigger the UI output. The process of the displaying the UI output within a window utilizing the API call mechanism is an asynchronous process. Automation code set provided to emulate interaction with the UI of a program is therefore faced with the difficulty of tracing an asynchronous process for testing.

Each of the windows (e.g., **304**) is managed by a thread that runs on the computing device. Each thread may manage more than one window. Each thread cycles messages for the windows that correspond to the thread. At any given time, multiple threads that each correspond to multiple windows may be running on a computing device. When a user input is detected that affects the UI output for a particular window, the system processes messages to the window to effect the necessary change in the display. Each thread has a corresponding message-queue, that corresponds to the messages currently being processed by the thread.

The present invention, injects or interludes the automation process into the process for providing messages to the windows by monitoring the message-queue of each thread. Accordingly, when the process of updating or changing the display as a result of a particular message is complete, the completion of this event is known to the automation process. When the message-queues of the relevant threads are empty, the automation process knows that the actions resulting from automation inputs have been processed.

In one embodiment, certain threads are identified as threads of importance (e.g., shell thread for the taskbar, thread corresponding to software input panel, windows currently displayed, and others), such that synchronization between these threads and the automation process is provided regardless of the program of interest. Stated differently, the UI output for a particular program may be processed by a particular thread. Rather than just monitoring the message-queue of this particular thread, the message-queues of other threads considered as threads of importance are also monitored. When the message-queues of each of the threads being monitored are empty, then the process knows that the actions resulting from automation inputs have been processed.

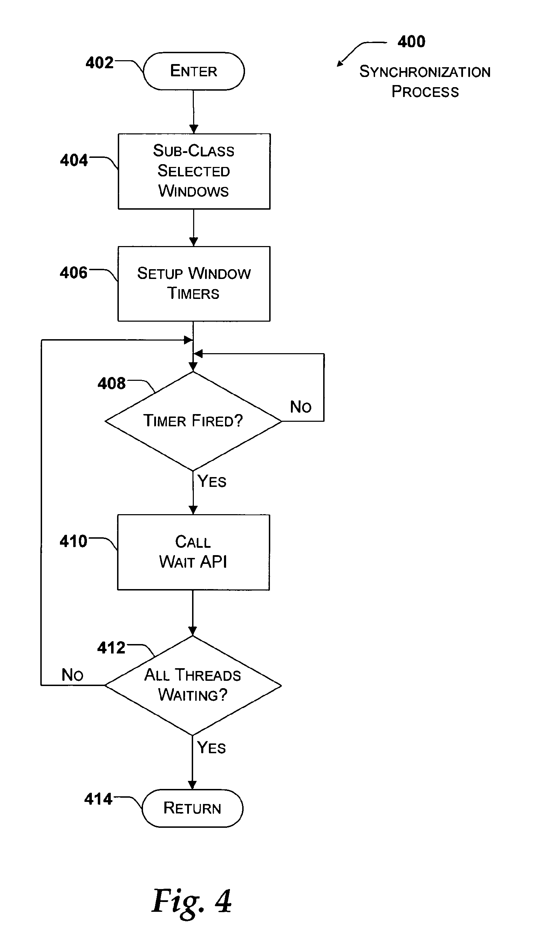

FIGURE 4 illustrates a logical flow diagram of a process for implicit UI synchronization in accordance with the present invention. The process **400** enters at an enter block **402** after an API for implementing the synchronization process has been called by the automation process. In one embodiment, the API called is entitled WaitForForegroundIdleEx. The synchronization API called uses a heuristic of monitoring the message queues of the threads which own visible windows, as well as the threads of some higher profile shell and system activities. Processing continues at block **404**.

At block **404**, certain selected windows that are being displayed are sub-classed by the synchronization API. In one embodiment, the synchronization API includes an internal C++ class that hooks a particular window such that the window is sub-classed. Sub-classing a window involves replacing the window procedure for a particular window with a window procedure corresponding to the automation process. As a result, when the window is displayed, the window procedure corresponding to the automation process is called rather than the original window procedure included in the program's code. In another embodiment, a dynamic link library (DLL) is loaded into the application's process space, such that the application hosts the hook code. The window procedure may then be implemented by referencing the hook-code through the DLL. Processing continues at block **406**.

At block **406**, timers are setup for the windows that have been sub-classed according to the synchronization API. In another embodiment, timers are also setup for threads of higher profile shell and system activities. A timer is a message-queue feature that may be configure to wait for a particular amount of time and provide a notification when the time has expired. In one embodiment, a timer set with a time period of zero is used, such that a particular characteristic of the timer is leveraged. When a time period of zero is used, a property of the timer is exploited wherein the timer fires when the message-queue is empty. Accordingly, when a timer notification that the timer has fired is received, the automation process knows that the message-queue is empty, if only temporarily. Processing continues at decision block **408**.

At decision block **408**, a determination is made whether a particular timer associated with a thread has fired. If the particular timer has not fired, processing returns to the beginning of block **408,** and continues to wait for the timer to fire. If the particular timer has fired, then the message-queue associated with that thread is empty and processing continues at block **410**.

At block **410**, an API is called that provides a notification when a message enters one of the message-queues of the relevant threads. In one embodiment, this wait API is referred to as the MsgWaitForMultipleObjects API. After the wait API is called, processing proceeds to decision block **412**.

At decision block **412**, a determination is made whether each of the relevant threads is waiting for a message. Each of the relevant threads is waiting for a message when each of the relevant threads is waiting on a call to the wait API. If all the relevant threads are not waiting on a call to the wait API, processing returns to decision block **408** to determine whether all of the relevant timers have fired. However, if all the relevant threads are waiting on a call to the wait API, then processing continues at block **414** where a return is provided from the synchronization process **400** to the automation process.

In another embodiment, the synchronization API might be configured to skip the wait API call, and simply guarantee that messages are being processed in all UI threads at once. The synchronization API may also be set to make sure that the message queues are all idle for a contiguous period of N milliseconds, rather than returning instantaneously.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A computer-implemented method for user interface automation synchronization, comprising:
sub-classing selected windows displayed on the user interface, wherein each of the selected windows corresponds to a message-queue of a thread;
setting timers corresponding to each of the selected windows;
determining whether a particular timer associate with one of the selected windows has fired; and
determining whether the message-queues of the threads are empty, such that when the message-queues are empty, the user interface automation proceeds to a next action.

2. The computer-implemented method of claim 1, further comprising calling a synchronization application program interface to initiate sub-classing of the selected windows.

3. The computer-implemented method of claim 1, further comprising calling a wait application program interface to determine whether the message-queues of the threads are empty.

4. The computer-implemented method of claim 3, wherein message-queues of the threads are indicated as empty when the user interface automation is waiting on the call to the wait application program interface.

5. The computer-implemented method of claim 1, wherein sub-classing a selected window corresponds to replacing window procedure code corresponding to the selected window with user interface automation code.

6. The computer-implemented method of claim 1, wherein the timers corresponding to each of the selected windows are set to zero.

7. The computer-implemented method of claim 1, wherein a determination that a particular timer associated with one of the selected windows has fired indicates that a message-queue corresponding to the one of the selected windows is empty.

8. The computer-implemented method of claim 1, further comprising setting timers corresponding to system activities.

9. The computer-implemented method of Claim 8, further comprising additionally determining whether the message-queues of threads corresponding to the system activities are empty before the user interface automation proceeds to a next action.

10. A computer-readable medium that includes computer-executable instructions for providing user interface automation synchronization, comprising:
hooking selected windows displayed on the user interface to correspond to user interface automation code, wherein each of the selected windows corresponds to a message-queue of a thread;
setting timers corresponding to each of the selected windows;
determining whether a particular timer associate with one of the selected windows has fired; and
determining whether the message-queues of the threads are empty, such that when the message-queues are empty, the user interface automation proceeds to a next action.

11. The computer-readable medium of claim 10, further comprising calling a synchronization application program interface to initiate sub-classing of the selected windows.

12. The computer-readable medium of claim 10, wherein hooking selected windows further comprises sub-classing selected windows such that window procedure code corresponding to the selected window is replaced with user interface automation code.

13. The computer-readable medium of claim 10, wherein hooking selected windows further comprises attaching a dynamic link library to window procedure code corresponding to the selected window.

14. The computer-readable medium of claim 10, further comprising calling a wait application program interface to determine whether the message-queues of the threads are empty.

15. The computer-implemented method of claim 14, wherein message-queues of the threads are indicated as empty when the user interface automation is waiting on the call to the wait application program interface.

16. The computer-implemented method of claim 10, wherein a determination that a particular timer associate with one of the selected windows has fired indicates that a message-queue corresponding to the one of the selected windows is empty.

17. A system for synchronizing user interface automation, comprising:
an application that includes an application program interface that is configured to:
hook selected windows displayed on the user interface to correspond to user interface automation code, wherein each of the selected windows corresponds to a message-queue of a thread;
set timers corresponding to each of the selected windows;
determine whether a particular timer associate with one of the selected windows has fired; and
determine whether the message-queues of the threads are empty, such that when the message-queues are empty, the user interface automation proceeds to a next action.

18. The system of claim 17, wherein the application program interface is further configured to call a wait application program interface to determine whether the message-queues of the threads are empty.

19. The system of claim 17, wherein message-queues of the threads are indicated as empty when the user interface automation is waiting on the call to the wait application program interface.

20. The system of claim 17, wherein the application program interface is further configured to set the timers corresponding to each of the selected windows to zero.

21. The system of claim 17, wherein the application program interface is further configured to set timers corresponding to system activities.

22. The system of claim 21, wherein the application program interface is further configured to additionally determine whether the message-queues of threads corresponding to the system activities are empty before the user interface automation proceeds to a next action.
